Europäisches Patentamt

European Patent Office

Office européen des brevets

(11) Veröffentlichungsnummer: **0 239 719**

**A2**

(12) # EUROPÄISCHE PATENTANMELDUNG

(21) Anmeldenummer: 87100227.5

(22) Anmeldetag: 09.01.87

(51) Int. Cl.⁴: **B60C 11/18**

(30) Priorität: 29.03.86 DE 3610662

(43) Veröffentlichungstag der Anmeldung:
07.10.87 Patentblatt 87/41

(84) Benannte Vertragsstaaten:
AT BE CH DE ES FR GB GR IT LI LU NL SE

(71) Anmelder: **Continental Gummi-Werke Aktiengesellschaft**
**Königsworther Platz 1 Postfach 169**
**D-3000 Hannover 1(DE)**

(72) Erfinder: **Holzbach, Wolfgang, Dr.**
**Landwehrriehte 15**
**D-3008 Garbsen 9(DE)**
Erfinder: **Huinink, Heinrich**
**Elbinger Strasse 27**
**D-3008 Garbsen 1(DE)**
Erfinder: **Rodewald, Helmut**
**An gr. Teichfeld 8**
**D-3164 Rötzum(DE)**
Erfinder: **Theusner, Martin, Dr.**
**Franzburger Strasse 13**
**D-3007 Gehrden(DE)**

(54) **Fahrzeugluftreifen.**

(57) Die Erfindung betrifft einen Fahrzeugluftreifen mit einem Laufstreifen, der von Rippen, Blöcken und dergl. gebildet ist. Um bei allen Fahrzuständen und allen Laufflächengestaltungen die Wirkung unterschiedlicher Gummimischungen für diese Rippen, Blöcke und dergl. voll zustande kommenzulassen, bestehen aufgrund der Erfindung die Laufflächenelemente aus mehreren Schichten unterschiedlicher Härte und/oder unterschiedlichen Abriebwiderstandes in der Weise, daß zumindest im Laufe der Abnutzung dieser Elemente sich in deren Laufläche Streifen mit unterschiedlicher Griffigkeit ergeben. Dabei sollen die Streifen von einander parallelen Schichten gebildet werden, die senkrecht in bezug auf die Laufläche angeordnet sind.

FIG.5

## Fahrzeugluftreifen

Die Erfindung betrifft einen Fahrzeugluftreifen mit einem aus Gummi oder gummiähnlichen Stoffen bestehenden Laufstreifen, der durch Vertiefungen mit voneinander getrennten Laufflächenelementen in Form von Rippen, Blöcken und dergl. versehen ist.

Es ist bekannt, die Laufstreifen von Fahrzeugluftreifen zonenweise, z.B. in der Laufflächenmitte einerseits und am Laufflächenrand andererseits in Abschnitte unterschiedlicher Beschaffenheit, z.B. in Abschnitte unterschiedlicher Abriebfestigkeit zu unterteilen. Die so ausgeführten Laufstreifen sind jedoch in starkem Maße abhängig von der Bemessung und der Beschaffenheit der einzelnen Abschnitte. Dies kann z.B. bei der Kurvenfahrt oder anderen Fahrzuständen von Nachteil sein.

Die Erfindung macht ebenfalls Gebrauch von dem Gedanken der Verwendung unterschiedlicher Gummiqualitäten, jedoch hat sie sich zur Aufgabe gestellt, die obigen Reifen so zu verbessern, daß bei allen Fahrzuständen und allen Laufflächengestaltungen die Wirkung der unterschiedlichen Gummimischungen voll zustande kommen kann.

Zur Lösung dieser Aufgabe bestehen erfindungsgemäß die Laufflächenelemente aus mehreren Schichten unterschiedlicher Härte und/oder unterschiedlichen Abriebwiderstandes in der Weise, daß zumindest im Laufe der Abnutzung dieser Elemente sich in deren Lauffläche Streifen unterschiedlicher Härte bzw. Streifen unterschiedlichen Abriebwiderstandes ergeben.

Demgemäß wird gewissermaßen jedes Laufflächenelement unterteilt bzw. aus den vorerwähnten Schichten zusammengesetzt, z.B. Schichten, die eine Wandstärke von 1 bis 3 mm haben, so daß z.B. über die Breite eines Laufflächenblockes hinweg fünf Schichten der einen Qualität und fünf Schichten der anderen Qualität vorgesehen sind.

Diese Schichtung hat noch den großen Vorteil, daß einzelne Schichten schneller abnutzen, um so z.B. scharfe Kanten für die benachbarte Schicht mit den anderen Eigenschaften zu bilden. Demgemäß entstehen Laufflächenelemente, die in sich aus einzelnen vergleichsweise kleinen Elementen bestehen bzw. von solchen gebildet werden. Damit wird die Anzahl der greifenden Kanten wesentlich vergrößert, da somit nicht nur die Kanten der einzelnen Laufflächenelemente, sondern die die Elemente bildenden Schichten je für sich zur Bildung der greifenden Elemente beitragen können.

Vorzugsweise werden die Schichten nicht gestreckt, also gerade verlaufend, sondern wellenförmig verlaufend ausgeführt, wobei auch ein Zickzackverlauf möglich ist. Darüber hinaus können die Schichten senkrecht in bezug auf die Lauffläche angeordnet sein, jedoch ist es auch möglich, die Schichten in einer Schrägstellung in bezug auf die Lauffläche anzuordnen.

Weitere Einzelheiten der Erfindung werden anhand der Zeichnung erläutert, in der ein Ausführungsbeispiel der Erfindung dargestellt ist.

Es zeigen

Fig. 1 einen radialen Teilschnitt durch einen Fahrzeugluftreifen für die Winderverwendung,

Fig. 2 eine Draufsicht auf die Lauffläche des Reifens gemäß Fig. 1 und

Fig. 3, 4 und 5 je Teilschnitte durch ein Laufflächenelement eines Reifens gemäß Fig. 1 und 2 in unterschiedlicher Ausführung.

Der aus Gummi oder gummiähnlichen Stoffen bestehende Reifenkörper 1 hat eine in den Reifenwülsten 2 verankerte Karkasse 3 mit einem darüber befindlichen zugfesten Gürtel 4, auf dem sich der Laufstreifen 5 mit der Lauffläche 6 befindet.

Der Laufstreifen 5 wird von mehreren Blöcken 7 gebildet, die standfest sein müssen aber über einen an sich beliebigen Grundriß verfügen können.

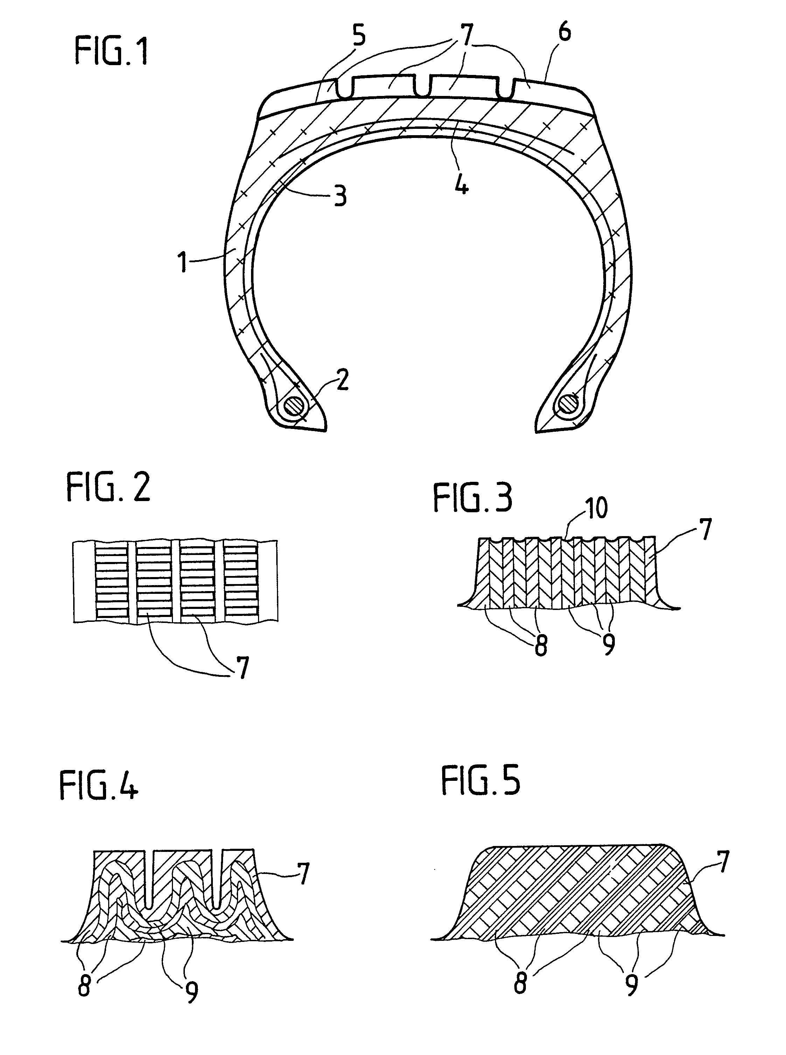

Diese Blöcke sind in den Fig. 3, 4 und 5 im Schnitt dargestellt.

Die Blöcke 7 bestehen aus einer Schichtung aus im wesentlichen einander parallelen Schichten 8 und 9, die gemäß Fig. 1 senkrecht in bezug auf die Lauffläche 6 angeordnet sind, bei der Ausführung gemäß Fig. 4 im wesentlichen parallel zur Außenkontur und somit wellenförmig verlaufend geformt sind, während die Schichten 8 und 9 gemäß Fig. 5 in Parallelstellung schräg zur Lauffläche 6 gerichtet sind und mit dieser z.B. einen Winkel von 45° einschließen.

Die Besonderheit besteht darin, daß aufeinanderfolgende Schichten 8, 9 mit einer Wandstärke von z.B. 1 bis 3 mm aus Gummimischungen unterschiedlicher Härte und/oder Abriebfestigkeit gefertigt sind, wobei es sich versteht, daß die Schichten 8 und 9 sandwichartig festhaftend miteinander verbunden sind.

Die Schichten 8, 9 werden so ausgeführt, daß sie zumindest nach kurzer Laufzeit des Reifens in die aktive Lauffläche 6 gelangen. Dort entstehen durch die unterschiedlichen Eigenschaften der Schichten 8, 9, z.B. in den Schichten 9 im Bereich der Lauffläche 6 kleine Auswaschungen, die bei 10 angedeutet sind, womit die Kanten der Schichten 8 besser wirksam werden können, um deren Griffigkeit unter Beweis zu stellen.

Die Laufflächenabschnitte jedes Blockes 7 sind somit nicht einheitlich glatt, sondern griffig, so daß die Lauffläche 6 insgesamt eine vergleichsweise große Anzahl greifender Kanten erhält.

Für den Fall, daß z.B. die Schichten 9 aus einem weniger abriebfesten Material gefertigt sind, ergibt sich der Zustand, der in Fig. 3 wiedergegeben ist unter Bildung der Auswaschungen bei 10. Unter gewissen Voraussetzungen ist es aber auch möglich, diesen Auswaschungs-und Griffigkeitseffekt durch Schichten 8, 9 unterschiedlicher Härte herbeizuführen, wobei es durchaus möglich ist, daß die Auswaschungen bei 10 in den Schichten größerer Härte entstehen.

## Ansprüche

1. Fahrzeugluftreifen mit einem aus Gummi oder gummiähnlichen Stoffen bestehenden Laufstreifen, der durch Vertiefungen mit voneinander getrennten Laufflächenelementen in Form von Rippen, Blöcken und dergl. versehen ist, dadurch gekennzeichnet, daß die Laufflächenelemente (7) aus mehreren Schichten (8, 9) unterschiedlicher Härte und/oder unterschiedlichen Abriebwiderstandes bestehen in der Weise, daß zumindest im Laufe der Abnutzung dieser Elemente sich in deren Lauffläche Streifen mit unterschiedlicher Griffigkeit ergeben.

2. Reifen nach Anspruch 1, dadurch gekennzeichnet, daß die im wesentlichen einander parallelen Schichten (8, 9) etwa senkrecht in bezug auf die Lauffläche (6) angeordnet sind.

3. Reifen nach Anspruch 1, dadurch gekennzeichnet, daß die Schichten (8, 9) mit der Lauffläche Winkel, z.B. Winkel von etwa 45° einschließen.

4. Reifen nach Anspruch 1, dadurch gekennzeichnet, daß die Schichten (8, 9) in Parallelstellung etwa wellenförmig gestaltet sind.

5. Reifen nach Anspruch 4, dadurch gekennzeichnet, daß der Verlauf der Schichten (9) im wesentlichen der Außenkontur der Blöcke (7) entspricht (Fig. 4).

6. Reifen nach Anspruch 1, dadurch gekennzeichnet, daß die Schichten (8, 9) unterschiedlicher Beschaffenheit aufeinanderfolgen.

7. Reifen nach Anspruch 1, dadurch gekennzeichnet, daß die Schichten (8, 9) sich durch einen Härteunterschied von etwa 10 Shore Grade A unterscheiden.

8. Reifen nach Anspruch 1, dadurch gekennzeichnet, daß sich die Schichten (8, 9) derart voneinander unterscheiden, daß sich durch den Abrieb zwischen Schichten (8) mit im wesentlichen gleicher Eigenschaft in der Lauffläche (6) Auswaschungen (10) in Form von rinnenförmigen Vertiefungen ergeben.

0 239 719

**FIG.1**

5 7 6

3
4
1
2

**FIG. 2**

7

**FIG.3**

10
7
8 9

**FIG.4**

7
8 9

**FIG.5**

7
8 9